# EUROPEAN PATENT SPECIFICATION

(11) **EP 1 465 110 B1**
(45) Date of publication and mention of the grant of the patent: **24.01.2007**
(21) Application number: 03079054.7
(22) Date of filing: 16.12.2003
(51) Int. Cl.: G06T 5/40, G06T 5/00, G06T 11/00, H04N 1/60

(54) **Method for transforming a coloured image**
Verfahren zur Transformation von Farbbildern
Méthode de transformation d'images en couleurs

(30) Priority: 24.12.2002 NL 1022258
(43) Date of publication of application: 06.10.2004
(73) Proprietor: Technische Universiteit Delft, 2628 BL Delft (NL)
(72) Inventor: Verbeek, Pieter Wilhelmus, 2631 HW Nootdorp (NL); Dijk, Judith, 3706 BK Zeist (NL)
(74) Representative: Van Breda, Jacobus

(56) References cited:
- EP-A- 0 403 081
- EP-A- 0 448 250
- EP-A- 0 546 773
- EP-A- 0 991 020
- EP-A- 1 107 580
- US-A- 5 416 890

## Description

The invention relates to a method for transforming a colour image.

Such a method is known and is used to adapt the image observed on a display monitor or a printer and/or copier to meet particular requirements.

Generally speaking, the colours reproduced by a monitor or printer/copier cover a limited section of the colour space, known as the gamut. In this gamut each pixel has a colour or hue, a chroma and a lightness. Said colorimetric system may be a known RGB-colorimetric system, or general XYZ-colorimetric system. However, it may also be a Lab- or Luv-colorimetric system. The invention discussed below relates to any arbitrary colorimetric system. For convenience's sake, however, the explanation given below refers to an XYZ-colorimetric system, without limiting the invention thereto. The invention may be applied with equal effect and with obvious adaptations in other colorimetric systems.

The colour images intended for image reproduction should, if the occasion arises, be subjected to an image transformation to improve, for example, contrast and/or definition. A problem with the prior art transformation of a colour image is that the original colour image is transformed into a new colour image of which some of the pixels have colours that fall outside the gamut and which, in order to be reproducible, have to be brought back inside the gamut. However, according to the prior art, this correction to the image transformation carried out does not take into account the position of the pixels in relation to each other, with respect to lightness, colour and chroma.

EP-A-0 961 488 discloses a method for transforming a colour image wherein for each separate pixel a measured level of lightness, a measured chroma and a measured colour is determined, followed by a predetermined adjustment in the three-dimensional level of lightness, chroma and colour. The adjustment of said three-dimensional levels known from this publication relates to a predetermined and invariable replacement of a given three-dimensional starting level into a three-dimensional target level of lightness, chroma and colour. The adjustment serves to make it possible to reproduce colour images available in a first system, for example, a television monitor, into a second system, for example, a hard copy of the colour image.

US-A-5,416,890 teaches a method for transforming a colour image in which
a. a direction of adjustment is determined by selection of a three-dimensional adjustment level for lightness, chroma and colour change,
b. and in which at the selected three-dimensional adjustment level the maximum available lightness change is determined, whereafter
c. the measured lightness level, the measured chroma and the measured colour is changed in the direction of the selected three-dimensional adjustment level in concurrence with a predetermined function, which at most amounts to the maximum available lightness change at the selected three-dimensional adjustment level.

The object of the invention is to provide a method for transforming a colour image for reproduction in one and the same system, or for reproduction in different systems having a compatible gamut that provides colour images whose separate pixels are optimally proportioned with respect to colour, chroma and lightness level to concur with the original colour image.

In this manner it is possible to ensure that an image transformation always provides a transformed colour image wherein the mutual relation of the imaging aspects of the separate pixels can be optimally maintained.

The method of the invention is characterized in that the adjustment of the lightness level is carried out only for each separate pixel in the vicinity of a lightness leap and in such a manner that in that vicinity the mean lightness remains substantially the same.

It is generally preferred for the colour to stay constant, so as to provide a true-to-life reproduction of the original image.

In a further aspect of the method according to the invention, the same is characterised in that the three-dimensional adjustment level is chosen such that only the lightness is adjusted while the chroma and the colour remain substantially constant. In this embodiment of the method according to the invention, the colour and the chroma are maintained while the image transformation only relates to an adjustment of lightness.

The adjustment of lightness that can be realised is per definition limited to the maximum of lightness adjustment available in a black and white image; with colour reproduction this lightness adjustment amounts to a fraction thereof. Nevertheless, if such a lightness adjustment threatens to fall outside the gamut, this can be taken into account when selecting the function determining the lightness adjustment, for example, by reducing the lightness adjustment exponentially or as power function, depending on the closeness of the original pixel to the gamut limit.

A further embodiment of the method according to the invention is characterised in that the function for adjustment of the lightness level and/or the chroma and/or the colour depends on a predetermined lightness threshold value, such that when exceeding the lightness threshold value, the measured lightness level will cause an increase to occur, and when falling short of the lightness threshold value, the measured lightness level will cause a reduction to occur.

This embodiment is especially suitable to improve the definition by means of the image transformation.

For the sake of completeness it may be remarked that in accordance with a main aspect of the invention, an adjustment in lightness as well as chroma and colour can be obtained by means of the function if the earlier-mentioned three-dimensional adjustment level of lightness change, chroma change, colour change are chosen aptly. If the light-ness space is likely to be inadequate, it can be increased by relinquishing some chroma, or changing colour, so as to increase the available space for adjusting the lightness.

In another embodiment the method according to the invention is characterised in that the function for adjusting the lightness level and/or the chroma and/or the colour depends on the absolute value of the measured lightness such that high levels are further increased and low levels are decreased or vice versa, with the meaning of "high" and "low" being previously determined. This affords a suitable method for obtaining an overall adjustment of the lightness of the total colour image.

In yet a further embodiment, the method according to the invention is characterised in that the function for adjusting the lightness level and/or the chroma and/or the colour depends on the absolute value of the measured lightness in a section of the colour image, such that low lightness levels in the section are increased and high lightness levels in the section are decreased, and wherein the meaning of "high" and "low" is previously determined. This makes it possible to effectively level out the lightness in colour images.

To the person skilled in the art it is obvious that within the framework of the invention revealed in the above description, numerous variations in grey level image transformations are conceivable, all of which apply the essence of the invention. A decisive roll plays the choice of the function determining the adjustment of the measured lightness level and/or the level of chroma and/or the colour, depending on the direction of adjustment determined by the selected three-dimensional adjustment level of lightness change, chroma change, colour change. Within the framework of the invention there is only one precondition the function must meet, namely that the transformation in a pixel brought about by this function will never result in more than the maximum available lightness change still available in the direction of the selected three-dimensional adjustment level within the limits of the gamut.

## Claims

1. A method for transforming a colour image, wherein a measured level of lightness, a measured chroma and a measured colour is determined, followed by a predetermined adjustment in the three-dimensional level of lightness, chroma and colour, such that
a. a direction of adjustment is determined by selection of a three-dimensional adjustment level for lightness, chroma and colour change,
b. and that at the selected three-dimensional adjustment level the maximum available lightness change is determined, whereafter
c. the measured lightness level, the measured chroma and the measured colour is changed in the direction of the selected three-dimensional adjustment level in concurrence with a predetermined function, which at most amounts to the maximum available lightness change at the selected three-dimensional adjustment level, **characterised in that** the function for adjustment of the lightness level and/or the chroma and/or the colour depends on a predetermined lightness threshold value, such that when exceeding the lightness threshold value, the measured lightness level will cause an increase to occur, and when falling short of the lightness threshold value, the measured lightness level will cause a reduction to occur, and **in that** the adjustment of the lightness level is carried out only for each separate pixel in the vicinity of a lightness leap and in such a manner that **in that** vicinity the mean lightness remains substantially the same.

2. A method according to claim 1, **characterised in that** the colour stays constant.

3. A method according to claim 1 or 2, **characterised in that** the three-dimensional adjustment level is chosen such that only the lightness is adjusted while the chroma and the colour remain substantially constant.

4. A method according to one of the claims 1-3, **characterised in that** the function for adjusting the lightness level and/or the chroma and/or the colour depends on the absolute value of the measured lightness such that high levels are further increased and low levels are decreased or vice versa, with the meaning of "high" and "low" being previously determined.

5. A method according to one of the claims 1-3, **characterised in that** the function for adjusting the lightness level and/or the chroma and/or the colour depends on the absolute value of the measured lightness in a section of the colour image, such that low lightness levels in the section are increased and high lightness levels in the section are decreased, and wherein the meaning of "high" and "low" is previously determined.

## Patentansprüche

1. Ein Verfahren zur Umwandlung einer Farbabbildung, wobei ein gemessener Wert der Helligkeit, eine gemessene Farbsättigung und ein gemessener Farbton bestimmt werden, gefolgt von einem vorbestimmten Abgleich in dem dreidimensionalen Wert der Helligkeit, der Farbsättigung und des Farbtons, so dass
a. eine Richtung des Abgleichs durch Wahl eines dreidimensionalen Abgleichswerts für die Helligkeits-, die Farbsättigungs- und der Farbtonänderung bestimmt wird,
b. und dass bei dem gewählten dreidimensionalen Abgleichswert die größte vorhandene Helligkeitsänderung bestimmt wird, wonach
c. der Wert der gemessenen Helligkeit, der gemessenen Farbsättigung und des gemessenen Farbtons in Richtung des gewählten dreidimensionalen Abgleichswerts in Übereinstimmung mit einer vorbestimmten Funktion geändert wird, welche maximal der vorhandenen Helligkeitsänderung bei dem gewählten dreidimensionalen Abgleichswert entspricht, **dadurch gekennzeichnet, dass** die Funktion zum Abgleich des Helligkeitswerts und/oder der Farbsättigung und/oder des Farbtons von einem vorbestimmten Helligkeitsgrenzwert abhängt, so dass bei Überschreiten des Helligkeitsgrenzwerts der gemessene Helligkeitswert veranlasst wird, dass eine Erhöhung stattfindet und bei Unterschreiten des Helligkeitsgrenzwerts der gemessene Helligkeitswerts veranlasst wird, dass eine Verminderung stattfindet, und dass der Abgleich des Helligkeitswerts nur für jedes getrennte Pixel in der Umgebung eines Helligkeitssprungs ausgeführt wird und dass in so einer Weise die mittlere Helligkeit in dieser Umgebung im Wesentlichen unverändert bleibt.

2. Ein Verfahren gemäß Anspruch 1, **dadurch gekennzeichnet, dass** der Farbton unverändert bleibt.

3. Ein Verfahren gemäß einem der Ansprüche 1 oder 2, **dadurch gekennzeichnet, dass** der dreidimensionale Abgleichswert so gewählt wird, dass nur die Helligkeit abgeglichen wird, während die Farbsättigung und der Farbton im Wesentlichen unverändert bleiben.

4. Ein Verfahren gemäß einem der Ansprüche 1 bis 3, **dadurch gekennzeichnet, dass** die Funktion des Abgleichs des Helligkeitswerts und/oder der Farbsättigung und/oder des Farbtons von einem absoluten Wert der gemessenen Helligkeit in der Weise abhängt, dass hohe Werte weiter erhöht und niedrige Werte reduziert werden oder das gleiche andersherum, wobei die Bedeutung von "hoch" und "niedrig" im Voraus bestimmt ist.

5. Ein Verfahren gemäß einem der Ansprüche 1 bis 3, **dadurch gekennzeichnet, dass** die Funktion des Abgleichs des Helligkeitswerts und/oder der Farbsättigung und/oder des Farbtons von einem absoluten Wert der gemessenen Helligkeit in einem Bereich der Farbabbildung abhängt, so dass kleine Helligkeitswerte in diesem Bereich vergrößert und große Helligkeitswerte in diesem Bereich verkleinert werden, und wobei die Bedeutung von "hoch" und "niedrig" im Voraus bestimmt ist.

## Revendications

1. Procédé pour transformer une image en couleur, dans lequel on détermine un niveau de clarté mesuré, un niveau de saturation mesuré et une couleur mesurée, suivi d'un réglage prédéterminé dans le niveau tridimensionnel de clarté, saturation et couleur, de sorte que :
a. une direction de réglage est déterminée par la sélection d'un niveau de réglage tridimensionnel pour le changement de clarté, de saturation et de couleur,
b. et que, au niveau de réglage tridimensionnel choisi, on détermine le changement de clarté possible maximum, après quoi :
c. le niveau de clarté mesuré, la saturation mesurée et la couleur mesurée sont modifiés dans la direction du niveau de réglage tridimensionnel choisi en accord avec une fonction prédéterminée, qui au plus s'élève au changement de clarté possible maximum au niveau de réglage tridimensionnel choisi, **caractérisé en ce que** la fonction pour le réglage du niveau de clarté et/ou de la saturation et/ou de la couleur dépend d'une valeur seuil de la clarté prédéterminée, telle que lorsque cette valeur seuil de clarté est dépassée, le niveau de clarté mesuré provoque une augmentation, et lorsque la valeur seuil de clarté n'est pas atteinte, le niveau de clarté mesuré provoque une réduction, et **en ce que** le réglage du niveau de clarté n'est effectué que pour chaque pixel distinct au voisinage d'un saut de clarté et de manière telle que, dans ce voisinage, la clarté moyenne reste sensiblement la même.

2. Procédé selon la revendication 1, **caractérisé en ce que** la couleur reste constante.

3. Procédé selon la revendication 1 ou 2, **caractérisé en ce que** le niveau de réglage tridimensionnel est choisi de telle façon que seule la clarté est réglée, tandis que la saturation et la couleur demeurent sensiblement constantes.

4. Procédé selon l'une des revendications 1 à 3, **caractérisé en ce que** la fonction pour le réglage du niveau de clarté et/ou de la saturation et/ou de la couleur dépend de la valeur absolue de la clarté mesurée, de sorte que les niveaux élevés sont davantage augmentés et les niveaux bas sont diminués, ou vice-versa, la signification de "élevé" et de "bas" étant déterminée au préalable.

5. Procédé selon l'une des revendications 1 à 3, **caractérisé en ce que** la fonction pour le réglage du niveau de clarté et/ou de la saturation et/ou de la couleur dépend de la valeur absolue de la clarté mesurée dans une partie de l'image en couleur, de sorte que les niveaux de clarté bas dans cette partie sont augmentés et les niveaux de clarté élevés dans cette partie sont diminués, la signification de "élevé" et de "bas" étant déterminée au préalable.
